# EUROPEAN PATENT APPLICATION

(11) **EP 4 206 128 A1**
(43) Date of publication of application: **05.07.2023**
(21) Application number: 21218133.3
(22) Date of filing: 29.12.2021
(51) Int. Cl.: C01B 32/205, B01J 23/34, B01J 23/745, B01J 23/75, B01J 23/889

(54) **METHOD FOR EXTRACTING FLAKE GRAPHITIZED CARBON BODY IN HUMAN HAIR WITH TRANSITION METAL ALLOY AS CATALYST**

(71) Applicant: Zhe Jiang Tip-Top Technology Co., Ltd., Quzhou City, Zhejiang (CN)
(72) Inventor: YE, Kexiao, Longyou City, Quzhou City (CN)
(74) Representative: Sach, Greg Robert

(57) **Abstract**

A method for extracting flake graphitized carbon body in human hair with transition metal alloy as catalyst is disclosed. In the process for extracting high-purity and high-graphitization carbon from human hair, the initial raw material is taken from human hair, the hair is preliminarily treated, roasted, and added with a bonding agent for compression molding, and is used as a reaction raw material, and an alloy of transition metals such as iron, cobalt, nickel, and the like is used as a catalyst, and the high-purity flake graphite is obtained under the condition of high temperature and high pressure by using a concentration gradient diffusion principle. The disclosure can extract carbon with high purity and high graphitization degree from human hair, and has the advantage that strong acid and strong alkali are not used in the process of extracting the graphitized carbon from the human hair, so that the pollution to the environment is reduced. Due to the use of metal catalysts, a high degree of graphitization of the carbon is achieved at lower temperatures. The obtained flake graphitized carbon can meet the requirements of carbon source purity and graphitization degree for cultivating large single crystal diamond of gem grade or industrial grade diamond abrasives by artificial high temperature and high pressure method, and can also be used as the initial reaction material of graphene.

## Description

### TECHNICAL FIELD

The present disclosure relates to a method for preparing a graphitized carbon body, in particular to a method for extracting flake graphitized carbon body in human hair with transition metal alloy as catalyst.

### BACKGROUND ART

Human hair is mainly composed of keratin, and compared with other biological materials, the carbon content in human hair is high up to 45.2%. For a long time, the extraction of high-purity, high-graphitization carbon body from human hair has always been a technical problem recognized in scientific circles, and the main difficulty lies in that biomass carbon belongs to a carbon body difficult to be graphitized, and even after multiple physical and chemical purifications, the purity can reach very high, up to 98% to 99% (such as patent WO2009091285A1), but it is difficult to completely graphitize, and even under a high temperature environment of 2500°C-3000°C, only a part of a graphite phase can be generated, and the graphitization process is very slow. It has been reported that the graphitizing temperature can be reduced by adding a metal element such as ferrosilicon, titanium, aluminum, or the like to carbon which is difficult to be graphitized, but it is also difficult to obtain a graphitized carbon body of 99% or more.In addition, the graphite phase in the carbon body obtained by this method is spheroidal graphite rather than flake graphite. Therefore, how to extract a flake graphite of high purity and high graphitization degree from human hair has not been well solved.

### SUMMARY

In view of this, the present disclosure provides a method for efficiently extracting flake carbon body with high-purity and high-graphitization degree from human hair, wherein the purity can reach 99.99%, the graphitization degree can reach 99.99%, and the flake carbon body has the same atomic structure, the same morphology, the similar density, and the same conductivity as natural flake graphite.

In order to achieve the purpose, the disclosure adopts the following technical scheme:
a method for extracting flake graphitized carbon body in human hair with transition metal alloy as catalyst, including the following steps:
   (1) washing and drying human hair, putting the dried hair into an alumina container, placing the alumina container in an atmosphere sintering furnace for roasting and continuously feeding fresh air to obtain a primary burned product of organic biological carbon;
   (2) placing the obtained primary burned product of organic biological carbon with an alumina ceramic container, and placing in a vacuum tube furnace for roasting to obtain a biomass carbon body;
   (3) ball-milling the biomass carbon body, adding a solvent into the biomass carbon body, fully stirring, drying, and ball-milling and crushing again to obtain biological carbon powders.
   (4) pressing the biological carbon powders into blocks, adding a metal catalyst after re-roasting in a high-temperature tubular vacuum furnace, placing the blocks in an assembly block for catalytic carbon deposition, heating and pressurizing the assembly block, and catalyzing the biological carbon by using a transition metal;
   (5) separating a flake graphite by acid washing, heating and distilling until no air bubbles are generated, and filtering to obtain a highly graphitized carbon body;
   (6) pulverizing the highly graphitized carbon body, performing acid washing again until no air bubbles are generated, filtering out the acid liquid, repeatedly cleaning with clear water, and finally filtering out water to obtain the graphitized carbon body;
   (7) performing ultrasonic cleaning on the graphitized carbon powder and drying to obtain a flake graphitized carbon body;
the metal catalyst is a bulk alloy of a transition metal.

Conventionally, when a metal catalyst is used to catalyze biological carbon or graphitized carbon, a powdery material such as iron silicide, titanium metal, or aluminum is generally used as a catalyst, the metal pow is usually mixed with biomass carbon or carbon body that are difficult to be graphitized, and then high-temperature graphitization catalysis is performed under the condition of no pressure or low pressure, the graphitization degree of the obtained graphitized carbon body is relatively low, and the obtained carbon body is spherical powder, in the disclosure for extracting flake graphitized carbon body in human hair with transition metal alloy as catalyst, in the process of extracting graphitized carbon from human hair, the problem of environmental pollution is fully considered, no strong acid, strong alkali solution, no reducing gas, no oxidizing gas, and only a certain amount of dilute nitric acid solution is used, which greatly reduces the pollution to the environment, in the high-temperature and high-pressure catalysis, the transition metal catalyst is used as a catalytic medium, so that the catalytic condition is greatly reduced, compared with the condition without the catalyst, the graphitization temperature is reduced by 1000°C, a bulk material is selected rather than a pow material, and the block material is heated to be above the melting point temperature under the extreme pressure of 4-5GPa to reach a molten state; the biological carbon undergoes the process of sufficient dissolution and precipitation, the precipitation process essentially realizes the process of completing rearrangement of carbon atoms, and the precipitated carbon has the same physical and chemical properties as natural flake graphite.

Further, the off-gas in the roasting process of step (1) is discharged into a water tank.

The further beneficial effect of adopting the above-mentioned method is that the off-gas is discharged after being filtered by water, and the pollution of the discharged gas to the environment is prevented.

Further, the solvent in step (3) is one or more of saturated phenolic resin alcohol solution and acetone solution, and the adding amount is 4-10 times of the mass of the biological carbon body.

The further beneficial effect of adopting the above-mentioned method is that the alcohol solution of the saturated phenolic resin and the acetone solution are used as solvents to facilitate the formation of the powder particles.

Further, the bulk alloy of the transition metal is an alloy prepared by mixing two or more of iron, cobalt, nickel and manganese in any ratio, and the addition amount is 10-50g, preferably the alloy prepared by mixing nickel, manganese and cobalt in a weight ratio of 75: 25: 5, and the addition amount is 10-50g.

The further beneficial effect of adopting the above-mentioned method is that the catalytic activity of cobalt and nickel is higher, and the alloy prepared by matching manganese in a specific proportion can further greatly reduce the catalytic condition, compared with the condition without catalyst, the graphitization temperature is reduced by 1000°C, and the precipitated carbon has the same physical and chemical properties as the natural scale graphite, and the catalyst and the graphitized carbon body are separated easily in the later period, and only need to be soaked in dilute nitric acid, and do not need to be heated by an electric furnace, and the energy consumption is the lowest.

Further, the condition for the catalytic carbon deposition in step (4) are at a temperature of 1400-1600°C and a pressure of 4.0-5.0GPa, the catalytic time is set depending on the amount of the catalytic hair, usually 24-72h.

The further beneficial effect of adopting the above-mentioned method is that under the condition of high temperature and high pressure, the biomass carbon body is arranged at the high temperature end of the assembly block by using the concentration gradient diffusion principle, the metal catalyst is arranged at the low temperature end, the carbon dissolved in the catalyst is diffused from the high temperature end to the low temperature end under the drive of the concentration gradient, and is crystallized and separated out in a graphite state at the low temperature end, so that the transformation of the carbon from an amorphous state to a crystalline state is completed, and the flake graphite is obtained, and strong acid and strong base solutions as well as reducing gas and oxidizing gas are not needed, and the environmental pollution is greatly reduced.

Further, the assembly block includes a pressure transmission medium pyrophyllite, a dolomite heat preservation ring, a sodium chloride ring, a graphite heating pipe, an alumina plug, a magnesium oxide plug ring, a conductive electrode and a zirconia plug ring,
the upper and lower sides of the pressure transmission medium pyrophyllite are provided with opening penetrating through the pressure transmission medium pyrophyllite to form a cavity, the cavity is internally provided with a re-calcined biological carbon powder and a metal catalyst coated by the alumina plug, and the biological carbon powder after re-roasting is positioned above the metal catalyst and is in close contact; the dolomite heat preservation ring, the sodium chloride ring and the zirconia plug ring are sequentially arranged between the pressure transmission medium pyrophyllite and the graphite heating pipe, the vacant part of that reaction chamber is filled with the magnesium oxide plug ring for fixing the graphite heating pipe.

The above structure is different from the assembly used for culturing the diamond by the temperature gradient method under the condition of high temperature and high pressure, and the inner part of the related assembly block has a large temperature gradient, the temperature gradient is set at 5-8 °C /mm, and the crystallization rate of the carbon body in the metal catalyst is controlled within 30-80mg/h. In addition, the assembly design can be maintained stably for 72 hours at a high temperature of 1600°C.

Further, acid washing is performed with 20-37 % nitric acid solution, preferably 37% nitric acid solution.

The further beneficial effect of adopting the above-mentioned method is that the acid washing with 20-37% dilute nitric acid is effective in removing metal catalysts and other impurities.

Further, the ultrasonic cleaning operation in step (7) is as follows: immersing the graphitized carbon powder in an absolute ethanol, and performing ultrasonic cleaning for 10 to 30min at a frequency of 30 to 40khz.

The further beneficial effect of adopting the above-mentioned method is that the residual acid liquid can be effectively removed, and the purity of the graphitized carbon body can be ensured.

### BRIEFT DESCRIPTION OF THE DRAWINGS

FIG. 1 is a structural sectional view of an assembly block according to the present disclosure;
FIG. 2 is an XRD diffraction pattern of the flake graphitized carbon body prepared in embodiment 1 of the present disclosure;
FIG. 3 is an XRD diffraction pattern of the flake graphitized carbon body prepared in embodiment 2 of the present disclosure.

In the drawings, the parts represented by the reference numerals are listed as follows:
101, pressure transmission medium pyrophyllite; 102, dolomite heat preservation ring; 103, sodium chloride ring; 104, graphite heating pipe; 105, alumina plug; 106, magnesium oxide plug ring, 107, conductive electrode; 108, zirconia plug ring.

### DETAILED DESCRIPTION OF THE EMBODIMENTS

Technical solutions in the embodiments of the present disclosure will be clearly and completely described below with reference to the accompanying drawings in the embodiments of the present disclosure, obviously, the described embodiments are only some embodiments of the present disclosure, rather than all of the embodiments. Based on the embodiments of the present disclosure, all other embodiments obtained by the ordinary person skilled in the art without creative labor fall within the scope of protection of the present disclosure.

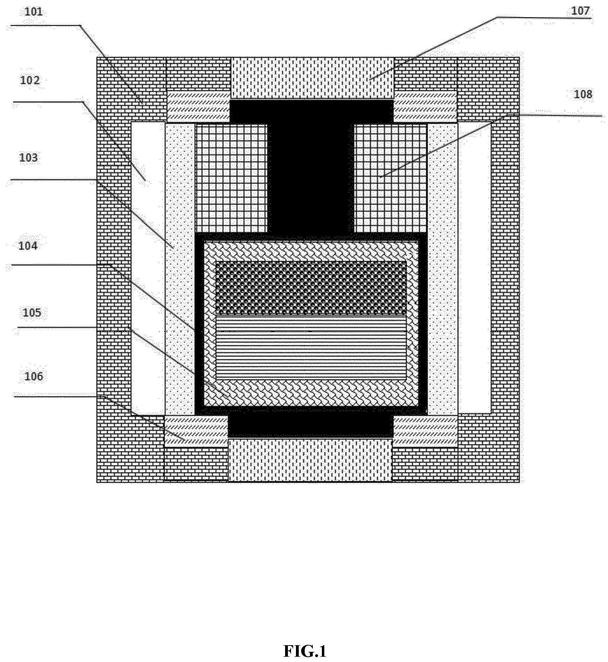

In the following embodiments, the structural diagram of the assembly block is shown in FIG. 1, the assembly block includes a pressure transmission medium pyrophyllite 101, a dolomite heat preservation ring 102, a sodium chloride ring 103, a graphite heating pipe 104, an alumina plug 105, a magnesium oxide plug ring 106, a conductive electrode 107 and a zirconia plug ring 108,
the upper and lower sides of the pressure transmission medium pyrophyllite 101 are provided with openings through the pressure transmission medium pyrophyllite 101 to form a channel, the openings at both ends of the pressure transmission medium pyrophyllite 101 are sealed with the conductive electrodes 107 to form a reaction chamber, the reaction chamber is provided with the graphite heating pipe 104, the upper and lower ends of the graphite heating pipe 104 are abutted with the conductive electrode 107, the graphite heating tube 104 is provided with a cavity, the cavity is internally provided with a re-calcined biological carbon powder and a metal catalyst coated by the alumina plug 105, and the biological carbon powder after re-roasting is positioned above the metal catalyst and is in close contact; the dolomite heat preservation ring 102, the sodium chloride ring 103 and the the zirconia plug ring 108 are sequentially arranged between the pressure transmission medium pyrophyllite 101 and the graphite heating pipe 104, the vacant part of that reaction chamber is filled with the magnesium oxide plug ring 106 for fixing the graphite heating pipe 104.

Other instruments or reagents without special instructions are all conventional instruments or reagents available from existing channels.

### Embodiment 1

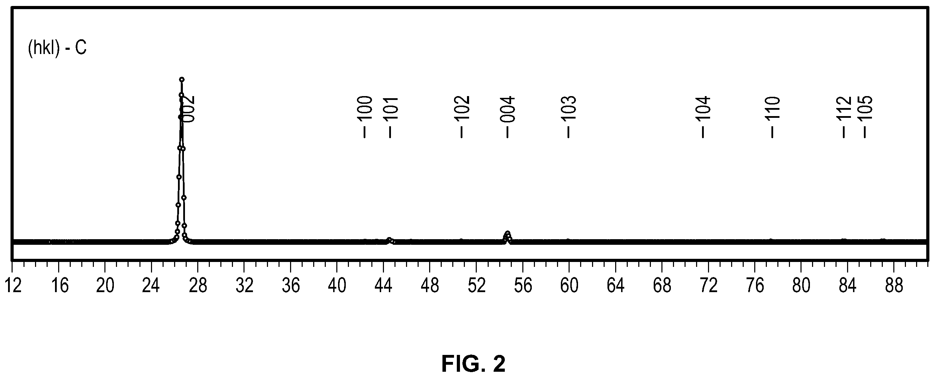

(1) Immersing 50g of human hair in 95% alcohol, performing ultrasonic cleaning, placing in a drying oven at 100°C for 1h to dry moisture, then placing in an alumina crucible, placing in an atmosphere sintering furnace for roasting and continuously feeding fresh air at a roasting temperature of 370°C, a heating rate of 6°C /min and a roasting time of 2h to obtain a primary burned product of organic biological carbon;
(2) placing the obtained primary burned product of organic biological carbon with an alumina ceramic burning boat, and placing in a vacuum tube furnace for roasting under the condition of negative pressure of 0.08MPa, temperature of 1400°C, heating rate of 5.5 °C/min and roasting time of 2h to obtain a biomass carbon body;
(3) ball-milling the biomass carbon body by a planetary ball mill, wherein the ball-milling medium is tungsten carbide balls, the ball-milling tank is made of stainless steel, the ball-milling condition is 1000r/min, and the time is 1h, then adding an alcohol solution dissolved with phenolic resin, the adding amount is 10 times of the mass of the biological carbon body, and the content of the phenolic resin accounts for 20% of the mass of the biological carbon, after fully stirring, putting the mixture on a heating furnace for drying for 1h, then ball-milling the biological carbon again to obtain the biological carbon powder;
(4) pressing the biological carbon powders into blocks, roasting again in a high-temperature tubular vacuum furnace under the conditions of negative pressure of 0.08MPa, temperature of 900°C, heating rate of 5.5°C/min, heat preservation for 3h, and roasting to obtain a cylindrical carbon body;
   the carbon body is placed in an assembly block, and the assembly mode of the assembly block is shown in FIG. 1, the size of the assembly block is 42^{∗}42^{∗} 42mm³, and the diameter of the internal cavity of the assembly block is 17mm, and the lower end of the carbon body is placed with a cylindrical nickel-cobalt alloy, the mass ratio of nickel to cobalt in the nickel-cobalt alloy is 1:1, the mass of the nickel-cobalt alloy is 10g, and the assembly block is used for catalytic graphitization, and the assembly block is placed in a ϕ420 hexagonal top press device to be heated and pressurized, the temperature is increased to 1500°C and the pressure is increased to 4GPa, and the heat is stopped after the pressure is maintained for 36h, the pressure is released to one standard atmospheric pressure, and the assembly block is crushed to take out the graphite-containing metal block.
(5) separating a flake graphite and metal iron with 37% nitric acid solution by acid washing, heating and distilling at 90°C until no air bubbles are generated, and filtering out the acid solution to obtain a highly graphitized carbon body;
(6) pulverizing the highly graphitized carbon body, performing acid washing with 37% nitric acid solution again until no air bubbles are generated, filtering, washing with clean water for 3 times to finally obtain a graphitized carbon powder;
(7) performing ultrasonic cleaning on the graphitized carbon powder at the frequency of 30kHz for 30 minutes and drying in a drying oven at 120°C for 1 hour to obtain the flake graphitized carbon body with the mass of about 3.5g, wherein the XRD diffraction pattern is shown in FIG. 2, and the diffraction pattern has a complete set of graphite diffraction peaks, and no diffraction peaks of other impurity elements are seen, so that the purity of carbon is high.

### Embodiment 2

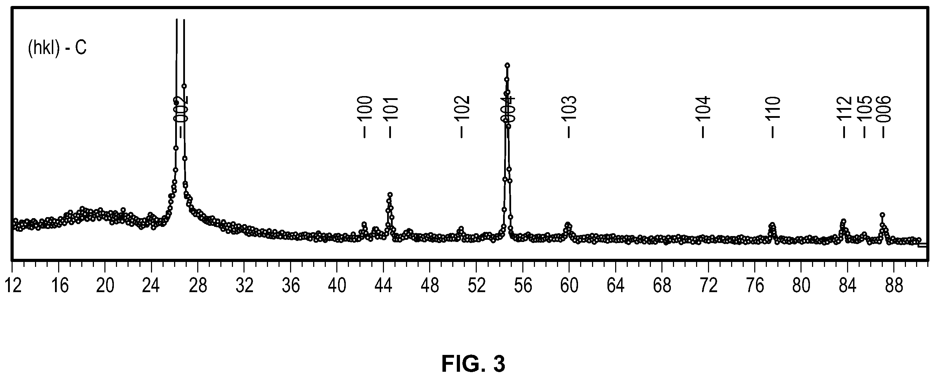

(1) Immersing 80g of human hair in 95% alcohol, performing ultrasonic cleaning, placing in a drying oven at 120°C for 1h to dry moisture, then placing in an alumina crucible, placing in an atmosphere sintering furnace for roasting and continuously feeding fresh air at a roasting temperature of 350°C, a heating rate of 6°C /min and a roasting time of 3h to obtain a primary burned product of organic biological carbon;
(2) placing the obtained primary burned product of organic biological carbon with an alumina ceramic container, and placing in a vacuum tube furnace for roasting under the condition of negative pressure of 0.1MPa, temperature of 1300°C, heating rate of 5.5 °C/min and roasting time of 5h to obtain a biomass carbon body;
(3) ball-milling the biomass carbon body by a planetary ball mill, wherein the ball-milling medium is zirconia balls, the ball-milling tank is made of agate material, the ball-milling condition is 800r/min, and the time is 2h, then adding an anhydrous alcohol solution dissolved with phenolic resin, the adding amount is 6 times of the mass of the biological carbon body, and the content of the phenolic resin accounts for 20% of the mass of the biological carbon, after fully stirring, putting the mixture on a heating furnace for drying for 1h, then ball-milling the biological carbon again to obtain the biological carbon powder;
(4) pressing the biological carbon powders into blocks, roasting again in a high-temperature tubular vacuum furnace under the conditions of negative pressure of 0.08MPa, temperature of 1000°C, heating rate of 5.5°C/min, heat preservation for 3h, and roasting to obtain a cylindrical carbon body;
   the carbon body is placed in an assembly block, and the assembly mode of the assembly block is shown in FIG. 1, the size of the assembly block is 64^{∗}64^{∗} 64mm³, and the diameter of the internal cavity of the assembly block is 32mm, and the lower end of the carbon body is placed with a cylindrical nickel-manganese-cobalt alloy, the weight ratio of nickel, manganese and cobalt in the nickel-manganese-cobalt alloy is 75: 25: 5, the mass of the nickel-manganese-cobalt alloy is 30g, and the assembly block is used for catalytic graphitization, and the assembly block is placed in a ϕ650 hexagonal top press device to be heated and pressurized, the temperature is increased to 1400°C and the pressure is increased to 4GPa, and the heat is stopped after the pressure is maintained for 72h, the pressure is released to one standard atmospheric pressure, and the assembly block is crushed to take out the graphite-containing metal block.
(5) separating a flake graphite with 20% nitric acid solution by acid washing, heating and distilling at 100°C until no air bubbles are generated, and filtering acid liquid, washing the carbon body with clear water for 5 times, and filtering water to obtain a highly graphitized carbon body;
(6) pulverizing the highly graphitized carbon body, performing acid washing with 37% nitric acid solution again until no air bubbles are generated, filtering, washing flake graphite with clean water to obtain a flake graphitized carbon powder finally;
(7) performing ultrasonic cleaning on the graphitized carbon powder at the frequency of 30kHz for 30 minutes and drying in a drying oven at 120°C for 1 hour to obtain the flake graphitized carbon body with the mass of about 6g, wherein the XRD diffraction pattern is shown in FIG. 3, and the diffraction pattern has a complete set of graphite diffraction peaks, and no diffraction peaks of other impurity elements are seen, so that the purity of carbon is high.

### Embodiment 3

(1) Immersing 100g of human hair in 95% alcohol, performing ultrasonic cleaning, placing in a drying oven at 120°C for 1h to dry moisture, then placing in an alumina crucible, placing in an atmosphere sintering furnace for roasting and continuously feeding fresh air at a roasting temperature of 360°C, a heating rate of 5°C /min and a roasting time of 3h to obtain a primary burned product of organic biological carbon;
(2) placing the obtained primary burned product of organic biological carbon with an alumina ceramic container, and placing in a vacuum tube furnace for roasting under the condition of negative pressure of 0.1MPa, temperature of 1350°C, heating rate of 5 °C/min and roasting time of 5h to obtain a biomass carbon body;
(3) Ball-milling the biomass carbon body by a planetary ball mill, wherein the ball-milling medium is zirconia balls, the ball-milling tank is made of agate material, the ball-milling condition is 1200r/min, and the time is 0.5h, then adding an acetone solution dissolved with phenolic resin, the adding amount is 10 times of the mass of the biological carbon body, and the content of the phenolic resin accounts for 20% of the mass of the biological carbon, after fully stirring, putting the mixture on a electric furnace for drying for 1h, then ball-milling the biological carbon again to obtain the biological carbon powder;
(4) pressing the biological carbon powders into blocks, roasting again in a high-temperature tubular vacuum furnace under the conditions of negative pressure of 0.1MPa, temperature of 900°C, heating rate of 5.5°C/min, heat preservation for 3h, and roasting to obtain a cylindrical carbon body;
   the carbon body is placed in an assembly block, and the assembly mode of the assembly block is shown in FIG. 1, the size of the assembly block is 76^{∗}76^{∗} 76mm³, and the diameter of the internal cavity of the assembly block is 41mm, and the lower end of the carbon body is placed with a cylindrical iron-cobalt-nickel alloy, the weight ratio of iron, cobalt and nickel in the nickel-manganese-cobalt alloy is 80: 20:15, the mass of the iron-cobalt-nickel alloy is 50g, and the assembly block is used for catalytic graphitization, and the assembly block is placed in a ϕ750 hexagonal top press device to be heated and pressurized, the temperature is increased to 1400°C and the pressure is increased to 4GPa, and the heat is stopped after the pressure is maintained for 72h, the pressure is released to one standard atmospheric pressure, and the assembly block is crushed to take out the graphite-containing metal block.
(5) Separating flake graphite and mental cobalt with 20% nitric acid solution by acid washing, heating and distilling at 100°C until no air bubbles are generated, and filtering acid liquid, washing the carbon body with clear water for 5 times, and filtering water to obtain a highly graphitized carbon body;
(6) pulverizing the highly graphitized carbon body, performing acid washing with 20% nitric acid solution again until no air bubbles are generated, filtering, washing flake graphite with clean water to obtain a flake graphitized carbon powder finally;
(7) performing ultrasonic cleaning on the graphitized carbon powder at the frequency of 40kHz for 30 minutes and drying in a drying oven at 120°C for 1 hour to obtain the flake graphitized carbon body with the mass of about 7.5g.

## Claims

1. A method for extracting a flake graphitized carbon body in human hair with transition metal alloy as catalyst, comprising the following steps:
(1) washing and drying human hair, putting the dried hair into an alumina container, placing the alumina container in an atmosphere sintering furnace for roasting and continuously feeding fresh air to obtain a primary burned product of organic biological carbon;
(2) placing the obtained primary burned product of organic biological carbon with an alumina ceramic container, and placing in a vacuum tube furnace for roasting to obtain a biomass carbon body;
(3) ball-milling the biomass carbon body, adding a solvent into the biomass carbon body, fully stirring, drying, and ball-milling and crushing again to obtain biological carbon powders.
(4) pressing the biological carbon powders into blocks, adding a metal catalyst after re-roasting in a high-temperature tubular vacuum furnace, placing the blocks in an assembly block for catalytic carbon deposition, heating and pressurizing the assembly block, and catalyzing the biological carbon by using a transition metal;
(5) separating a flake graphite by acid washing, heating and distilling until no air bubbles are generated, and filtering to obtain a highly graphitized carbon body;
(6) pulverizing the highly graphitized carbon body, performing acid washing again until no air bubbles are generated, filtering out the acid liquid, repeatedly cleaning with clear water, and finally filtering out water to obtain the graphitized carbon body;
(7) performing ultrasonic cleaning on the graphitized carbon powder and drying to obtain a flake graphitized carbon body;
in step (4), the metal catalyst is a bulk alloy of a transition metal; the bulk alloy of the transition metal is an alloy of two or more kinds of iron, cobalt and manganese, and the adding amount is 10-50g;
the roasting condition is that the negative pressure is 0.08-0.1MPa, the temperature is 900 -1200°C, the heating rate is 2-5.5°C/min, and the heat preservation is 2 -5h;
the condition of the catalytic carbon deposition is that the temperature is 1400 -1600°C, the pressure is 4.0-5.0GPa, and the deposition time is 24 -72h;
the assembly block comprises a pressure transmission medium pyrophyllite (101), a dolomite heat preservation ring (102), a sodium chloride ring (103), a graphite heating pipe (104), an alumina plug (105), a magnesium oxide plug ring (106), a conductive electrode (107) and a zirconia plug ring (108), the upper and lower sides of the pressure transmission medium pyrophyllite (101) are provided with opening penetrating through the pressure transmission medium pyrophyllite (101) to form a cavity, the cavity is internally provided with a re-calcined biological carbon powder and a metal catalyst coated by the alumina plug (105), and the biological carbon powder after re-roasting is positioned above the metal catalyst and is in close contact; the dolomite heat preservation ring (102), the sodium chloride ring (103) and the zirconia plug ring (108) are sequentially arranged between the pressure transmission medium pyrophyllite (101) and the graphite heating pipe (104), the vacant part of that reaction chamber is filled with the magnesium oxide plug ring (106) for fixing the graphite heating pipe (104).

2. The method of claim 1, wherein in step (1), the roasting temperature is 350-370°C, the heating rate is 2-6°C/min, and the roasting time is 2-5h.

3. The method of claim 1, wherein the roasting condition in step (2), the negative pressure is 0.08-0.1MPa, the temperature is 1300-1400°C, the heating rate 2-5.5°C / min, and the time 2-5h.

4. The method of claim 1, wherein the ball-milling operation in step (3) is ball-milling with a ball grinding mill, and the ball-milling condition is 800-2000r/min for 0.5-2h.

5. The method of claim 1, wherein the solvent in step (3) is one or more of saturated phenolic resin alcohol solution and acetone solution, and the addition amount is 4-10 times of the mass of the biomass carbon.

6. The method of claim 1, wherein the acid washing in step (5) is performed with a nitric acid solution of 20% -37%; the temperature of the heat distillation is 90-110°C.

7. The method of claim 1, wherein the acid washing in step (6) is performed with a 20% -37% nitric acid solution.

8. The method of claim 1, the ultrasonic cleaning operation in step (7) is as follows: immersing the graphitized carbon powder in an absolute ethanol, and performing ultrasonic cleaning for 10 to 30min at a frequency of 30 to 40khz.
